# FASCICULE DE BREVET EUROPEEN

(11) **EP 2 160 682 B1**
(45) Date de publication et mention de la délivrance du brevet: **25.04.2012**
(21) Numéro de dépôt: 08806944.8
(22) Date de dépôt: 28.08.2008
(51) Int. Cl.: H04L 12/18, H04L 12/24, H04L 29/08, H04L 29/12, G06F 11/22

(54) **CARTE ÉLECTRONIQUE APTE Á EXÉCUTER UNE COMMANDE PROVENANT D'UN SYSTÈME DE SIMULATION ET UNE COMMANDE PROVENANT D'UN MODULE DE DIAGNOSTIC ET PROCÉDÉ DE SIMULATION ASSOCIÉ**
ELEKTRONISCHE KARTE MIT DER FÄHIGKEIT ZUR AUSFÜHRUNG EINES AUS EINEM SIMULATIONSSYSTEM STAMMENDEN BEFEHLS UND EINES AUS EINEM DIAGNOSTIKMODUL STAMMENDEN BEFEHLS UND DIESBEZÜGLICHES SIMULATIONSVERFAHREN
ELECTRONIC CARD ABLE TO EXECUTE A COMMAND ORIGINATING FROM A SIMULATION SYSTEM AND A COMMAND ORIGINATING FROM A DIAGNOSTIC MODULE AND ASSOCIATED SIMULATION METHOD

(30) Priorité: 28.06.2007 FR 0756129; 31.08.2007 FR 0757293
(43) Date de publication de la demande: 10.03.2010
(73) Titulaire: AIRBUS OPERATIONS, 31060 Toulouse (FR)
(72) Inventeur: SELLIER, Grégory, F-31830 Plaisance du Touch (FR); HABIGAND, Thierry, F-31170 Tournefeuille (FR); DESSERTENNE, Franck, F-31770 Colomiers (FR)
(74) Mandataire: Bonnans, Arnaud
(86) Numéro de dépôt international: PCT/IB2008/002242
(87) Numéro de publication internationale: WO 2009/001218

(56) Documents cités:
- JP-A- 2006 048 402
- US-A1- 2004 216 100
- AIDEMARK J ET AL: "A Framework for Node-Level Fault Tolerance in Distributed Real-Time Systems" DEPENDABLE SYSTEMS AND NETWORKS, 2005. DSN 2005. PROCEEDINGS. INTERNAT IONAL CONFERENCE ON YOKOHAMA, JAPAN 28-01 JUNE 2005, PISCATAWAY, NJ, USA,IEEE, 28 juin 2005 (2005-06-28), pages 656-665, XP010817841 ISBN: 9780769522821

## Description

La présente invention concerne des cartes électroniques.

Particulièrement, l'invention concerne des cartes électroniques utilisées dans les simulateurs d'intégration, notamment dans les simulateurs des équipements d'un aéronef.

Corrélativement, elle concerne un système de diagnostic des cartes électroniques.

AIDEMARK J ET AL: "A Framework for Node-Level Fault Tolerance in Distributed Real-Time Systems" (PROCEEDINGS. INTERNAT IONAL CONFERENCE ON YOKOHAMA, JAPAN 28-01 JUNE 2005, PISCATAWAY, NJ, USA, IEEE, 28 juin 2005, pages 656-665, ISBN: 9780769522821) décrit un système informatique insensible aux défaillances pour des commandes en temps réel d'applications de sécurité critiques par exemple de systèmes de contrôle de vol informatisé.

Les simulateurs d'intégration sont utilisés pour assurer le développement et l'intégration des systèmes électroniques et informatiques embarqués dans les aéronefs, en particulier avant le premier vol.

Les simulateurs d'intégration comprennent essentiellement un calculateur hôte (connu sous le nom de « host »), des équipements réels de l'aéronef et une interface électronique reliant ces deux éléments.

L'interface électronique comprend plusieurs cartes électroniques, permettant de mettre les équipements de l'aéronef en situations réelles, comme par exemple certaines conditions météorologiques, conditions de panne..., Cette interface génère ou acquiert des signaux gérés par le calculateur hôte destinés à la simulation des équipements réels.

Le calculateur hôte comprend pour ce faire des modèles de simulation de l'aéronef et de son environnement. Des systèmes périphériques sont connectés aux équipements réels et comprennent des programmes de vérification.

Un simulateur d'intégration est un système temps réel, ce qui revient à dire, que les tests sur les équipements sont réalisés à la vitesse de leur déroulement réel.

De ce fait, lorsqu'un dysfonctionnement au niveau des cartes électroniques est détecté, il est nécessaire d'arrêter le fonctionnement du simulateur d'intégration afin de repérer où se trouve exactement le dysfonctionnement.

Ainsi, afin de trouver l'origine du dysfonctionnement, on doit mettre en place des équipements de test, tels qu'un analyseur logique sur un bus temps réel qui relie le calculateur hôte et les cartes électroniques, et un multimètre ou un oscilloscope sur les entrées/sorties des cartes électroniques.

Du fait de l'arrêt du fonctionnement temps réel du système d'intégration, le dysfonctionnement n'est pas toujours visible, et il est ainsi difficile de repérer où il se trouve.

Il est alors nécessaire de tester la ou les cartes dans des bancs de test dédiés une fois que la ou les cartes sont enlevées du montage du simulateur d'intégration.

Il existe aussi un système qui peut être connecté sur certaines cartes électroniques permettant la configuration des paramètres des cartes ou la lecture de certaines adresses mémoire.

Ce système émet des commandes de diagnostic afin d'analyser le fonctionnement de la carte électronique et ainsi de repérer le dysfonctionnement.

Néanmoins, pour les mêmes raisons que précédemment, cette connexion et ces opérations de diagnostic réalisées sur les cartes à l'aide du module sont réalisées hors du fonctionnement temps réel du système de simulation d'intégration.

Ces méthodes pour repérer le dysfonctionnement dans les cartes électroniques sont peu efficaces et impliquent une perte de temps dû à la complexité de ces méthodes.

D'autre part, lorsque l'exécution des programmes de simulation des équipements réels est mise en place et que l'on souhaite modifier la valeur de certains paramètres, il faut arrêter la simulation, modifier les programmes de simulation et recommencer la simulation.

Compte tenu du long temps nécessaire pour la mise en oeuvre de ces programmes, cette façon de procéder est inefficace.

La présente invention a pour but de résoudre les limitations précitées et de proposer une carte électronique permettant d'exécuter une commande provenant d'un module de diagnostic et une commande provenant d'un système de simulation en temps réel.

A cet effet, la présente invention vise selon un premier aspect, une carte électronique comprenant une unité de traitement.

La carte électronique est apte à recevoir une commande provenant d'un module de diagnostic et une commande provenant d'un système de simulation, et comporte des moyens de gestion de la priorité d'exécution de la commande provenant du système de simulation par rapport à celle de la commande provenant du module de diagnostic.

Ainsi, il est possible d'exécuter une commande provenant du module de diagnostic ou une commande provenant du système de simulation sans arrêter respectivement l'exécution temps réel d'une commande provenant du système de simulation ou d'une commande provenant du module de diagnostic.

Selon une caractéristique préférée, les moyens de gestion sont aptes à provoquer l'exécution de la commande provenant du système de simulation en priorité sur l'exécution de la commande provenant du module de diagnostic.

Ainsi, l'exécution d'une commande provenant du module de diagnostic ne perturbe pas l'exécution temps réel d'une commande provenant du système de simulation.

Selon une autre caractéristique préférée, la commande provenant du système de simulation est préemptive par rapport à la commande provenant du module de diagnostic.

Par conséquent, lors de l'arrivée d'une commande provenant du système de simulation au cours de l'exécution d'une commande provenant du module de diagnostic, la carte interrompt l'exécution de la commande provenant du module de diagnostic et commence immédiatement l'exécution de la commande provenant du système de simulation.

En pratique, la carte électronique comporte des moyens de mémorisation de la commande provenant du module de diagnostic sur la carte électronique pendant l'exécution de la commande provenant du système de simulation et des moyens d'exécution de la commande provenant du module de diagnostic une fois que l'exécution de la commande provenant du système de simulation est terminée.

Ainsi, lorsqu'une commande provenant du système de simulation est en cours d'exécution et qu'une commande provenant du module de diagnostic arrive, celle-ci est mémorisée dans une mémoire embarquée dans la carte électronique et attend que l'exécution de la commande provenant du système de simulation soit terminée pour être exécutée à son tour.

Par exemple, la commande provenant du module de diagnostic est une commande de forçage d'une valeur d'un paramètre de la carte électronique.

Ainsi, des commandes provenant du système de simulation et du module de diagnostic peuvent être exécutées avec des valeurs forcées, afin de pouvoir mener des analyses et investigations.

En variante, la commande provenant du module de diagnostic comporte une fonction d'enregistrement d'une valeur d'un paramètre.

En effet, il est intéressant lors de l'analyse ou de l'investigation, de connaître des valeurs de certains paramètres.

Avantageusement, les commandes provenant du module de diagnostic sont implémentées par une tache de fond non prioritaire.

Ainsi, une tâche de fond détecte la fin de l'exécution de la commande provenant du système de simulation et procède ensuite à l'exécution d'une commande provenant du module de diagnostic en attente.

Ainsi, l'exécution temps réel de la commande provenant du système de simulation n'est pas perturbée.

La présente invention vise selon un deuxième aspect un système de diagnostic d'une carte électronique.

Le système de diagnostic comporte un module de diagnostic et une carte électronique conforme à l'invention.

Ainsi, le système de diagnostic de la carte électronique est apte à déterminer la priorité d'exécution des commandes provenant du module de diagnostic et du système de simulation sans pour autant arrêter l'exécution temps réel des commandes.

Ces moyens de gestion de la priorité d'exécution des commandes sont les moyens de gestion de la priorité des commandes de la carte électronique décrite ci-dessus.

Ce système de diagnostic présente des caractéristiques et avantages analogues à ceux décrits précédemment en relation avec la carte électronique.

La présente invention vise selon un troisième aspect un procédé d'exécution d'une commande provenant d'un système de simulation et d'une commande provenant d'un module de diagnostic, mise en ouvre par une carte électronique conforme à l'invention.

Ce procédé présente des caractéristiques et avantages analogues à ceux décrits précédemment en relation avec la carte électronique et ils ne seront donc pas tous rappelés dans ce qui suit.

L'invention concerne un procédé de simulation au moyen d'une carte électronique d'une commande provenant d'un module de diagnostic et d'une commande provenant d'un système de simulation , avec une étape de gestion de la priorité d'exécution de la commande provenant du système de simulation par rapport à celle de la commande provenant du module de diagnostic.

Selon une caractéristique préférée, l'exécution de la commande provenant du système de simulation est prioritaire par rapport à l'exécution de la commande provenant du module de diagnostic.

Par ailleurs, la commande provenant du système de simulation est préemptive par rapport à la commande provenant du module de diagnostic.

Selon une caractéristique préférée, le procédé comporte les étapes suivantes :
- mémorisation de la commande provenant du module de diagnostic pendant l'exécution de la commande provenant du système de simulation, et
- exécution de la commande provenant du module de diagnostic une fois que la commande provenant du système de simulation est terminée.

Par exemple, le procédé comporte l'exécution d'une commande provenant du module de diagnostic, la commande étant une commande de forçage d'une valeur d'un paramètre.

En variante, le procédé comporte l'exécution d'une commande provenant du module de diagnostic, la commande comportant une fonction d'enregistrement d'une valeur d'un paramètre.

Selon une autre caractéristique préférée, la commande provenant du module de diagnostic est implémentée par une tache de fond non prioritaire.

La présente invention vise aussi l'utilisation de la carte électronique et du procédé d'exécution conformes à l'invention pour l'analyse d'un dysfonctionnement de la carte électronique intégrée dans un simulateur d'intégration.

De la même manière, la présente invention vise l'utilisation d'un système de diagnostic pour l'analyse d'un dysfonctionnement de la carte électronique intégrée dans un simulateur d'intégration.

Par ailleurs, le simulateur d'intégration est un simulateur d'intégration des équipements d'un aéronef.

Aux dessins annexés, donnés à titre d'exemples non limitatifs :
- la figure 1 est une représentation schématique d'un simulateur d'intégration ; et
- la figure 2 est une représentation schématique du traitement des commandes par une carte électronique conforme à l'invention dans le simulateur d'intégration de la figure 1.

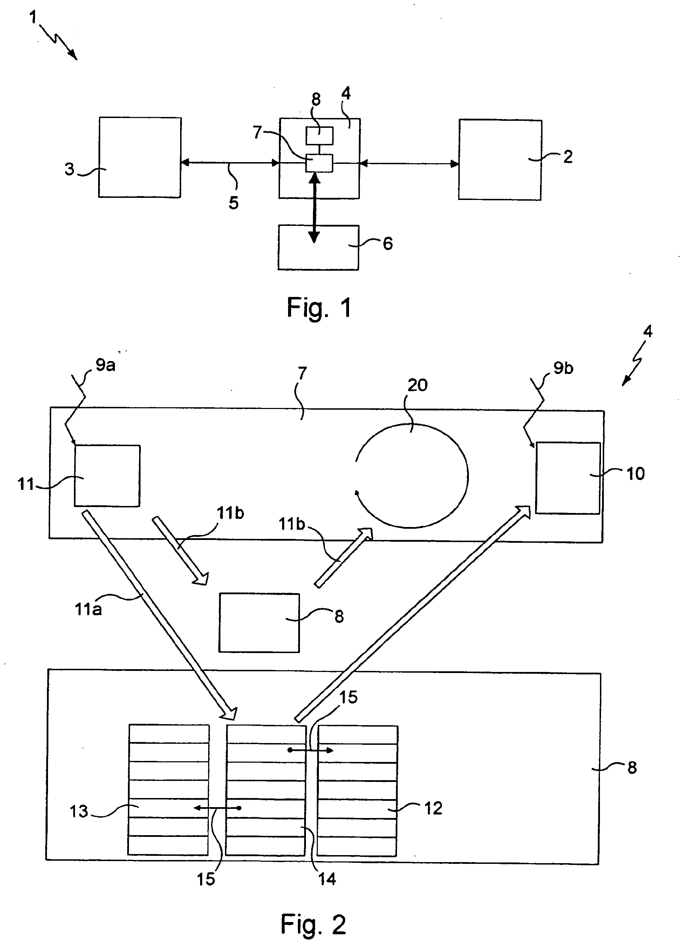

On va décrire en référence aux figures 1 et 2 un simulateur d'intégration comprenant un système de diagnostic et une carte électronique conforme à l'invention.

Un simulateur d'intégration 1 comporte un équipement réel 2, un système de simulation 3 et une interface électronique 4 situé entre eux.

Un équipement réel 2 est à titre d'exemple un cockpit d'un aéronef, des calculateurs avioniques, des actionneurs de gouvernes ou des générateurs électriques et hydrauliques.

Cet équipement 2 n'est pas nécessairement un système réel destiné à un aéronef mais il peut être également un modèle utilisé pour la conception de celui-ci.

Ici, le système de simulation 3 est un calculateur hôte.

Le calculateur hôte 3 modélise l'aéronef et son environnement, et émet des commandes de simulation à ces équipements.

L'émission de ces commandes est par exemple réalisée, une fois que le calculateur hôte 3 a émis une commande de début (destinée à démarrer le fonctionnement du système d'intégration), ainsi qu'une commande de configuration du système d'intégration.

Le calculateur hôte 3 est par exemple constitué de serveurs avec une grande puissance de calcul.

Un serveur utilisé est par exemple, le serveur connu sous la référence « alpha server ES45 » conçu par la compagnie Hewlett Packard.

L'interface électronique 4 comporte des cartes électroniques permettant de mettre les équipements d'un aéronef dans des situations réelles, lors de la simulation des signaux émis par le calculateur hôte 3 destinés à la simulation des équipements réels 2.

A titre d'exemple, ces cartes sont des cartes type ARINC 429 ou AFDX.

L'interface électronique 4 est connectée au calculateur hôte au moyen d'un bus 5 à haute vitesse.

En même temps, le bus connecte les cartes électroniques entre elles mêmes.

A titre d'exemple, le bus est un bus connu sous le nom VME (« Versa Module Eurocard ») qui est un bus standard issu du monde industriel. Ce bus est particulièrement bien adapté pour la connexion de différentes cartes électroniques au calculateur hôte 3. Il est adapté à la gestion d'entrées/sorties.

Lorsque l'on s'aperçoit qu'une des cartes électroniques présente un dysfonctionnement ou que l'on veut forcer la valeur de certains paramètres des cartes électroniques, un module de diagnostic 6 est connecté à la carte électronique 4.

Le module de diagnostic 6 est par exemple un ordinateur personnel. La connexion entre le module de diagnostic 6 et la carte électronique 4 est réalisée par exemple via le port série RS232 de cet ordinateur.

Le module de diagnostic 6 est adapté à émettre des commandes de diagnostic 11 en vue d'obtenir en retour des informations du fonctionnement de la carte électronique 4, ainsi que de forcer de valeurs de paramètres des cartes électroniques 4.

Ainsi, avec ces commandes de diagnostic 11, il est possible d'analyser le comportement de la carte électronique 4 en vue de repérer le dysfonctionnement constaté lors des tests d'intégration des équipements ou lors de la phase de conception des équipements.

La carte électronique 4 comporte un microprocesseur 7 et de la mémoire 8.

Le microprocesseur 7 est adapté à exécuter les commandes 10, 11 que la carte électronique 4 reçoit en provenance du calculateur hôte 3 et du module de diagnostic 6.

Lorsque les commandes 10, 11 (provenant du calculateur hôte 3 et du module de diagnostic 6) arrivent à la carte électronique 4, elles lèvent une interruption 9a, 9b. Ces commandes 10, 11 ont une priorité différente selon le type de commande.

La carte électronique 4 est adaptée à gérer l'ordre d'exécution de ces commandes 10, 11.

Ainsi, lorsque la carte 4 exécute une commande 10 provenant du calculateur hôte 3 et qu'une interruption du module de diagnostic 9a est levée par l'arrivée d'une commande 11 provenant du module de diagnostic 6, ou lorsque la carte 4 exécute une commande 11 provenant du module de diagnostic 6 et qu'une interruption du calculateur hôte 9b est levée par l'arrivée d'une commande 10 provenant du calculateur hôte 3, la carte 4 est adaptée à gérer ces scénarios par une gestion de la priorité des interruptions en fonction de la provenance et du type des commandes.

Le système de diagnostic comporte ainsi le module de diagnostic 6 ainsi que les moyens nécessaires pour mettre en oeuvre la gestion de la priorité des interruptions 9a, 9b.

Le calculateur hôte accorde un temps au microprocesseur 8 de la carte électronique pour l'exécution des commandes 10, 11.

A titre d'exemple illustratif, ce temps est de 10ms ; le temps d'exécution d'une commande 10 provenant du calculateur hôte est de 8ms ; et le temps d'exécution d'une commande 11 provenant du module de diagnostic 6 est de 2ms.

On va décrire en référence à la figure 2 cette gestion de priorités par la carte électronique 4.

Sur la figure 2, un microprocesseur 7 et de la mémoire 8 embarqués sur la carte électronique 4 sont représentés.

Comme déjà cité dans ce document, la carte électronique 4 reçoit les commandes 10 provenant du calculateur hôte 3 et des commandes 11 provenant du module de diagnostic 6 qui sont exécutées lors de l'interruption 9a, 9b. Ces interruptions 9a, 9b ont des priorités d'exécution différentes.

On notera que dans cet exemple, les commandes 10 provenant du calculateur hôte 3 arrivent à la carte électronique par le bus VME 5 de connexion entre eux.

Les commandes provenant du module de diagnostic 6 arrivent à la carte électronique 4 par la liaison série RS232 entre le module de diagnostic 6 et la carte électronique 4.

Il existe différentes types de commandes provenant du module de diagnostic 6.

Les commandes provenant du module de diagnostic 6 comportent un code binaire représentant le type de commande et permettant ainsi au microprocesseur 7 de reconnaître le type de commande 11 arrivée à la carte électronique 4.

La priorité la plus élevée est la priorité des commandes 10 provenant du calculateur hôte 3. Ainsi, lorsqu'une commande 10 provenant du calculateur hôte 3 est exécutée dans le microprocesseur 7 et qu'une commande 11 provenant du module de diagnostic 6 arrive, le microprocesseur 7 continue l'exécution de la commande 10 provenant du calculateur hôte 3 et une fois terminée, il commence l'exécution de la commande 11 provenant du module de diagnostic 6.

Les commandes 10 provenant du calculateur hôte 3 sont préemptives par rapport aux commandes 11 provenant du module de diagnostic 6.

Ainsi, lorsqu'une commande 11 provenant du module de diagnostic 6 est exécutée et une interruption 9b est levée par l'arrivée d'une commande 10 provenant du calculateur hôte 3, l'exécution de la commande 11 provenant du module de diagnostic 6 est arrêtée et la commande 10 provenant du calculateur hôte 3 commence à être exécutée.

En effet, l'interruption 9a, 9b de priorité supérieure est prise en compte lors du traitement d'une autre interruption 9a, 9b, mais une interruption 9a, 9b de priorité inferieure est mise en attente.

Une fois que l'exécution de la commande 10 provenant du calculateur hôte 3 est terminée, la commande 11 provenant du module de diagnostic 6 reprend son exécution à l'endroit où elle s'était arrêtée.

Lorsque les commandes 11 provenant du module de diagnostic 6 arrivent à la carte électronique 4 et que le microprocesseur 7 est occupé par l'exécution d'une commande, les commandes 11 provenant du module de diagnostic 6 sont mémorisées dans la mémoire embarquée 8 sur la carte électronique 4, afin d'attendre leur d'exécution.

Cette mémoire 8 est par exemple une mémoire volatile de type FIFO (First In, First Out).

Bien entendu, lorsqu'aucune commande 10 provenant du calculateur hôte 3 n'est exécutée dans le microprocesseur 7 embarqué dans la carte électronique 4, et qu'une commande 11 provenant du module de diagnostic 6 arrive, il n'est pas nécessaire de mémoriser la commande La commande peut être directement exécutée.

L'interruption 9a provoquée par les commandes 11 provenant du module de diagnostic 6 ou commandes de diagnostic 11 ont une priorité deux.

On notera qu'une interruption de priorité deux est de priorité inférieure à une interruption de priorité une.

Lorsqu'une commande 10 provenant du calculateur hôte 3 est exécutée et qu'une commande de diagnostic 11 arrive, cette commande de diagnostic 11 est mémorisée dans la mémoire embarquée 8. Les commandes de diagnostic 11 sont ainsi exécutées par ordre d'arrivée sur la carte 4 et donc par ordre de mémorisation sur la mémoire 8.

Les commandes de diagnostic 11 sont exécutées par une tâche de fond 20. Cette tâche de fond 20 détecte les instants dans lequel le microprocesseur 7 est inactif et exécute des commandes de diagnostic 11 mémorisées en mémoire 8 et en attente d'exécution.

Ici, les commandes 11 provenant du module de diagnostic 6 sont notamment deux types.

Un premier type de commande de diagnostic 11 est une commande de forçage 11a (le terme forçage est aussi connu par le terme « injection »).

Dans ce mode de réalisation, la commande de forçage 11 a consiste au forçage d'un paramètre de la carte électronique 4 à une valeur définie dans la commande de forçage 11a.

Ce paramètre peut être un paramètre en entrée ou en sortie de la carte, ou un paramètre intermédiaire utilisé pour des calculs internes.

Ainsi, au moyen d'une commande de forçage 11 a, il est possible de forcer des paramètres de sortie de la carte, correspondant à des paramètres en entrée de l'équipement réel 2, ou bien, à des paramètres d'entrée du calculateur hôte 3, ainsi que de forcer des paramètres de configuration de la carte électronique 4.

L'exécution de cette commande de forçage 11 a peut être suivie de l'exécution d'une commande 10 provenant du calculateur hôte 3 ou d'une autre commande 11 provenant du module de diagnostic 6. Ainsi la commande 10,11 s'exécute prenant en compte des valeurs forcées et non réelles.

Cette fonction est utilisée par exemple lorsque l'on veut analyser une commande 10,11 lorsque la sortie est fixée à une valeur.

On notera que lors de la mise en oeuvre de la commande de forçage 10a sur certains paramètres d'entrée ou de sortie de la carte électronique 4, une commande provenant du calculateur hôte 3 peut être mise en oeuvre en même temps, si cette dernière commande n'utilise pas des paramètres d'entrée ou de sortie utilisée par la commande de forçage 11 a.

Bien évidement, si la commande provenant du calculateur hôte 3 utilise les paramètres qui vont être forcés par la commande de forçage 11 a, la commande de forçage 11 a sera seulement mise en ouvre une fois que la commande 10 provenant du calculateur hôte 3 soit terminée.

Cette commande de forçage 11 a est réalisée de la façon suivante.

La mémoire 8 embarquée dans la carte électronique 4 comporte une zone mémoire comprenant une table contenant des valeurs des paramètres utilisés par l'exécution d'une commande, aussi appelée table de valeurs réelles 12.

La mémoire 8 comporte également une zone mémoire comprenant une table réservée à des valeurs de forçage aussi appelée table de valeurs de forçage 13.

Enfin, la mémoire comporte une zone mémoire comprenant une table de pointeurs 14 utilisés dans l'exécution des commandes.

Lorsqu'une commande 11 provenant du module de diagnostic 6 est une commande de forçage 11 a, et une fois que l'exécution de la commande 10 provenant du calculateur hôte 3 est terminée, les valeurs de forçage sont mémorisées dans la table de valeurs de forçage 13 et le pointeur 15 d'accès à la table de valeurs réelles 12 pointera alors à la table de valeurs de forçage 13.

Ainsi, l'exécution de la commande 10, 11 (provenant du calculateur hôte 3 ou du module de diagnostic 6) suivante sera implémentée avec des valeurs de forçage et non des valeurs réelles.

Une fois que la fin de la simulation avec des valeurs de forçage est souhaitée, une commande 11 provenant du module de diagnostic 6 indiquant la fin de forçage est reçue.

Ainsi, l'exécution de la commande 10,11 (provenant du calculateur hôte 3 ou du module de diagnostic 6) suivante sera implémentée avec des valeurs réelles.

Un second type de commande 11 provenant du module de diagnostic 6 comporte une fonction d'enregistrement 11 b d'un paramètre.

Dans ce mode de réalisation, plusieurs types de fonction d'enregistrement sont possibles.

Un premier type de fonction d'enregistrement 11b consiste à surveiller des valeurs de paramètres acquises par le calculateur hôte 3 ou des valeurs de paramètres envoyées par le calculateur hôte à la carte électronique 4.

Les paramètres à enregistrer sont déterminés par le module de diagnostic 6. Le module de diagnostic 6 associe au paramètre à enregistrer, une étiquette d'identification de l'enregistrement à effectuer.

Dans le code exécuté par la commande de diagnostic 11 b, des points d'enregistrement sont prévus.

Ainsi, à titre d'exemple, lorsque le paramètre change de valeur à un point d'enregistrement prévu dans le code, la valeur du paramètre déterminé est enregistrée à ce moment là.

De la même manière, il est possible de suivre dans le temps de la valeur d'un paramètre (connu par le terme anglais de monitoring).

Les paramètres à enregistrer sont également déterminés par le module de diagnostic 6 à l'aide d'étiquettes d'identification de l'enregistrement à effectuer associées au paramètre à enregistrer.

Dans ce cas, l'enregistrement est mis en oeuvre périodiquement.

Les valeurs enregistrées sont mémorisées dans la mémoire embarquée 8 de la carte électronique 4, elles sont ensuite mises en forme par la tache de fond 20 et envoyées au module de diagnostic 6.

Un deuxième type de fonction d'enregistrement 11 b est la consultation des paramètres de configuration de la carte électronique 4.

Un troisième type de fonction d'enregistrement 11 b est la consultation des états de fonctionnement de la carte électronique.

Ces états de fonctionnement peuvent être par exemple, un état d'initialisation de la carte électronique, un état de mise en oeuvre des commandes, ou un état d'erreur.

Un quatrième type de fonction d'enregistrement 11 b est la consultation des états de dysfonctionnement de la carte électronique 4. Cette fonction nous permet de repérer un dysfonctionnement et d'investiguer ensuite ce qui le provoque.

Bien entendu, d'autres types de fonctions pourraient être mises en oeuvre par le système de diagnostic.

Ainsi, grâce à l'invention, il est possible d'exécuter une commande provenant d'un module de diagnostic sans perturber l'exécution temps réel d'une commande provenant du système de simulation.

Par conséquent, lorsqu'un dysfonctionnement au niveau de la carte électronique est détecté, il est possible de repérer l'origine du dysfonctionnement, sans arrêter l'exécution temps réel de la commande provenant du système de simulation. Ainsi, l'origine du dysfonctionnement est repérée de façon rapide et efficace.

Par ailleurs, il est possible de forcer des valeurs de paramètres de la carte électronique sans, ni arrêter, ni perturber le fonctionnement temps réel du simulateur d'intégration.

Bien entendu, de nombreuses modifications peuvent être apportées à l'exemple de réalisation décrit précédemment sans sortir du cadre de l'invention.

## Revendications

1. Carte électronique (4) comprenant une unité de traitement (7), **caractérisée en ce qu'**elle est apte à recevoir une commande provenant d'un module de diagnostic (6) et une commande provenant d'un système de simulation (3),et **en ce qu'**elle comporte des moyens de gestion de la priorité d'exécution de la commande provenant du système de simulation (3) par rapport à celle de la commande provenant du module de diagnostic (6).

2. Carte électronique (4) conforme à la revendication 1, **caractérisée en ce que** lesdits moyens de gestion sont aptes à provoquer l'exécution de la commande provenant du système de simulation (3) en priorité sur l'exécution de la commande provenant du module de diagnostic (6).

3. Carte électronique (4) conforme à l'une des revendications 1 ou 2, **caractérisée en ce que** la commande provenant du système de simulation (3) est préemptive par rapport à la commande provenant du module de diagnostic (6).

4. Carte électronique (4) conforme à l'une des revendications 1 à 3, **caractérisée en ce qu'**elle comporte des moyens de mémorisation de la commande provenant du module de diagnostic (6) sur la carte électronique (4) pendant l'exécution de la commande provenant du système de simulation (3) et des moyens d'exécution de ladite commande provenant du module de diagnostic (6) une fois que l'exécution de ladite commande provenant du système de simulation (3) est terminée.

5. Carte électronique (4) conforme à l'une des revendications 1 à 4, **caractérisée en ce que** la commande provenant du module de diagnostic (6) est une commande de forçage (11a) d'une valeur d'un paramètre de la carte électronique (4).

6. Carte électronique (4) conforme à l'une des revendications 1 à 4, **caractérisée en ce que** la commande provenant du module de diagnostic (6) comporte une fonction d'enregistrement d'une valeur d'un paramètre.

7. Carte électronique (4) conforme à l'une des revendications 1 à 6, **caractérisée en ce que** les commandes provenant du module de diagnostic (11b) sont implémentées par une tache de fond (20) non prioritaire.

8. Système de diagnostic d'une carte électronique (4), **caractérisé en ce qu'**il comporte un module de diagnostic (6) et une carte électronique conforme à l'une des revendications 1 à 7.

9. Procédé de simulation au moyen d'une carte électronique (4), **caractérisé en ce qu'**il comporte l'exécution d'une commande provenant d'un module de diagnostic (6) et d'une commande provenant d'un système de simulation (3), et **en ce qu'**il comporte une étape de gestion de la priorité d'exécution de la commande provenant du système de simulation (3) par rapport à celle de la commande provenant du module de diagnostic (6).

10. Utilisation d'une carte électronique (4) conforme à l'une des revendications 1 à 7, mettant en oeuvre un procédé conforme à la revendication 9, pour l'analyse d'un dysfonctionnement de la carte électronique (4) intégrée dans un simulateur d'intégration (1).

## Claims

1. Electronic card (4) comprising a processing unit (7), **characterized in that** it is able to receive a command originating from a diagnostic module (6) and a command originating from a simulation system (3), and **in that** it comprises means for managing the execution priority of the command originating from the simulation system (3) in relation to that of the command originating from the diagnostic module (6).

2. Electronic card (4) in accordance with claim 1, **characterized in that** the said management means are able to bring about execution of the command originating from the simulation system (3) with priority over execution of the command originating from the diagnostic module (6).

3. Electronic card (4) in accordance with one of claims 1 or 2, **characterized in that** the command originating from the simulation system (3) is preemptive in relation to the command originating from the diagnostic module (6).

4. Electronic card (4) in accordance with one of claims 1 to 3, **characterized in that** it comprises means for storage of the command originating from the diagnostic module (6) on the electronic card (4) during execution of the command originating from the simulation system (3) and means for execution of the said command originating from the diagnostic module (6) once execution of the said command originating from the simulation system (3) is concluded.

5. Electronic card (4) in accordance with one of claims 1 to 4, **characterized in that** the command originating from the diagnostic module (6) is a command for forcing (11 a) of a value of a parameter of the electronic card (4).

6. Electronic card (4) in accordance with one of claims 1 to 4, **characterized in that** the command originating from the diagnostic module (6) comprises a function for recording a value of a parameter.

7. Electronic card (4) in accordance with one of claims 1 to 6, **characterized in that** the commands (11 b) originating from the diagnostic module are implemented by a non-priority background task (20).

8. Diagnostic system for an electronic card (4), **characterized in that** it comprises a diagnostic module (6) and an electronic card in accordance with one of claims 1 to 7.

9. Method for simulation by means of an electronic card (4), **characterized in that** it comprises the execution of a command originating from a diagnostic module (6) and of a command originating from a simulation system (3), and **in that** it comprises a step of managing the execution priority of the command originating from the simulation system (3) in relation to that of the command originating from the diagnostic module (6).

10. Use of an electronic card (4) in accordance with one of claims 1 to 7, using a method in accordance with claim 9, for the analysis of a malfunction of the electronic card (4) incorporated into an integration simulator (1).

## Patentansprüche

1. Elektronische Karte (4) mit einer Verarbeitungseinheit (7),
**dadurch gekennzeichnet, dass** sie dazu geeignet ist, einen aus einem Diagnosemodul (6) stammenden Befehl und einen aus einem Simulationssystem (3) stammenden Befehl zu empfangen, und dass sie Mittel zum Steuern der Priorität der Ausführung des aus dem Simulationssystem (3) stammenden Befehls gegenüber derjenigen des aus dem Diagnosemodul (6) stammenden Befehls aufweist.

2. Elektronische Karte (4) nach Anspruch 1,
**dadurch gekennzeichnet, dass** die Steuermittel dazu geeignet sind, die Ausführung des aus dem Simulationssystem (3) stammenden Befehls vorrangig gegenüber der Ausführung des aus dem Diagnosemodul (6) stammenden Befehls zu bewirken.

3. Elektronische Karte (4) nach einem der Ansprüche 1 oder 2,
**dadurch gekennzeichnet, dass** der aus dem Simulationssystem (3) stammende Befehl präemptiv ist gegenüber dem aus dem Diagnosemodul (6) stammenden Befehl.

4. Elektronische Karte (4) nach einem der Ansprüche 1 bis 3,
**dadurch gekennzeichnet, dass** sie Mittel zum Abspeichern des aus dem Diagnosemodul (6) stammenden Befehls auf der elektronischen Karte (4) während der Ausführung des aus dem Simulationssystem (3) stammenden Befehls sowie Mittel zum Ausführen des aus dem Diagnosemodul (6) stammenden Befehls nach Beendigung der Ausführung des aus Simulationssystem (3) stammenden Befehls enthält.

5. Elektronische Karte (4) nach einem der Ansprüche 1 bis 4,
**dadurch gekennzeichnet, dass** der aus dem Diagnosemodul (6) stammende Befehl ein Rücksetzbefehl (11a) zum Zurücksetzen eines Wertes eines Parameters der elektronischen Karte (4) ist.

6. Elektronische Karte (4) nach einem der Ansprüche 1 bis 4,
**dadurch gekennzeichnet, dass** der aus dem Diagnosemodul (6) stammende Befehl eine Funktion zum Registrieren eines Wertes eines Parameters enthält.

7. Elektronische Karte (4) nach einem der Ansprüche 1 bis 6,
**dadurch gekennzeichnet, dass** die aus dem Diagnosemodul stammenden Befehle (11b) durch ein nicht prioritäres Hintergrundprogramm (20) implementiert sind.

8. Diagnosesystem für eine elektronische Karte (4),
**dadurch gekennzeichnet, dass** es ein Diagnosemodul (6) und eine elektronische Karte nach einem der Ansprüche 1 bis 7 enthält.

9. Verfahren zur Simulation mittels einer elektronischen Karte (4),
**dadurch gekennzeichnet, dass** es die Ausführung eines aus einem Diagnosemodul (6) stammenden Befehls und eines aus einem Simulationssystem (3) stammenden Befehls umfasst und dass es einen Schritt zum Steuern der Priorität der Ausführung des aus dem Simulationssystem (3) stammenden Befehls gegenüber derjenigen des aus dem Diagnosemodul (6) stammenden Befehls enthält.

10. Verwendung einer elektronischen Karte (4) nach einem der Ansprüche 1 bis 7, bei welcher ein Verfahren nach Anspruch 9 zur Analyse einer Funktionsstörung der elektronischen Karte (4), die in einem Integrationssimulator (1) integriert ist, Anwendung findet.
